# EUROPÄISCHE PATENTSCHRIFT

(11) **EP 3 122 218 B1**
(45) Veröffentlichungstag und Bekanntmachung des Hinweises auf die Patenterteilung: **09.05.2018**
(21) Anmeldenummer: 15712836.4
(22) Anmeldetag: 19.03.2015
(51) Int. Cl.: A47J 41/00

(54) **ISOLIERKANNE**
VACUUM FLASK
CRUCHE ISOTHERME

(30) Priorität: 24.03.2014 DE 202014101352 U
(43) Veröffentlichungstag der Anmeldung: 01.02.2017
(73) Patentinhaber: Melitta Europa GmbH & Co. KG, 32427 Minden (DE)
(72) Erfinder: SACHTLEBEN, Andreas, 32427 Minden (DE)
(74) Vertreter: Dantz, Jan Henning
(86) Internationale Anmeldenummer: PCT/EP2015/055760
(87) Internationale Veröffentlichungsnummer: WO 2015/144550

(56) Entgegenhaltungen:
- EP-A1- 0 158 244
- DE-A1- 19 907 195
- US-B1- 6 997 104

## Beschreibung

Die vorliegende Erfindung betrifft eine Isolierkanne nach dem Oberbegriff des Anspruches 1.

Die DE 199 07 195 offenbart eine Isolierkanne, bei der ein Behälter mit einem Deckel verschlossen ist. Der Deckel ist dabei über eine Kippkante und einen Betätigungshebel verschwenkbar gelagert, um eine Ausgießöffnung herzustellen. Durch eine zwischen dem Betätigungshebel und dem Haltegriff angeordnete Schließfeder ist der Deckel in eine Verschlussposition vorgespannt. Der Deckel kann durch ein Anstoßen an Gegenstände ungewollt geöffnet und geschlossen werden. Zudem gestaltet sich die Montage des Deckels aufwändig, der über zusätzliche Verbindungselemente am Kannengriff gehalten wird. Ein vollständiges Abnehmen des Deckels erfordert mehrere Montageschritte.

Die EP 0 158 244 A1 offenbart eine Isolierkanne mit einem Gehäuse, einer Füllöffnung und einem Deckel, der durch eine Formschlußverbindung am Gehäuse festlegbar ist. Durch eine erste Handhabe kann ein durch den Deckel hindurchgeführten Verstellmechanismus ein Verschlussschieber zwischen einer Schließstellung und einer Öffnungsstellung betätigt werden.

Der vorliegenden Erfindung liegt daher die Aufgabe zugrunde, eine Isolierkanne bereitzustellen, bei der der Deckel für den Benutzer leicht zu montieren und leicht zu demontieren ist.

Diese Aufgabe wird mit einer Isolierkanne mit den Merkmalen des Anspruches 1 gelöst.

Bei der erfindungsgemäßen Isolierkanne ist der Deckel auf eine Aufnahme des Behälters aufsteckbar und über Rastmittel in der Verschlussposition gehalten. Dadurch entfällt ein Aufschrauben des Deckels oder ein Festlegen über einen Bajonettverschluss, bei dem regelmäßig mehrere Montageschritte notwendig sind, insbesondere muss das Montieren des Deckels mit zwei Händen erfolgen. Bei der erfindungsgemäßen Lösung kann der Deckel einfach von oben auf den Behälter aufgesteckt und verrastet werden, was eine Einhandbedienung ermöglicht.

Für eine effektive Montage kann das Rastmittel mindestens einen biegbaren Federsteg aufweisen, vorzugsweise sind an gegenüberliegenden Seiten des Deckels jeweils biegbare Federstege vorgesehen. Jeder biegbare Steg kann dabei einen nach außen gerichteten Rastvorsprung aufweisen, der an einem Rastvorsprung des Behälters fixiert werden kann.

Für eine einfache Handhabung kann jeder biegbare Federsteg einen Betätigungsabschnitt aufweisen, mittels dem die Federstege zum Lösen der Rastverbindung nach innen gedrückt werden. Auch das Entnehmen des Deckels kann mit einer Hand erfolgen.

Weitere Vorteile der Erfindung sind in den Unteransprüchen erläutert.

Die Erfindung wird nachfolgend anhand eines Ausführungsbeispiels mit Bezug auf die beigefügten Zeichnungen näher erläutert: Es zeigen:

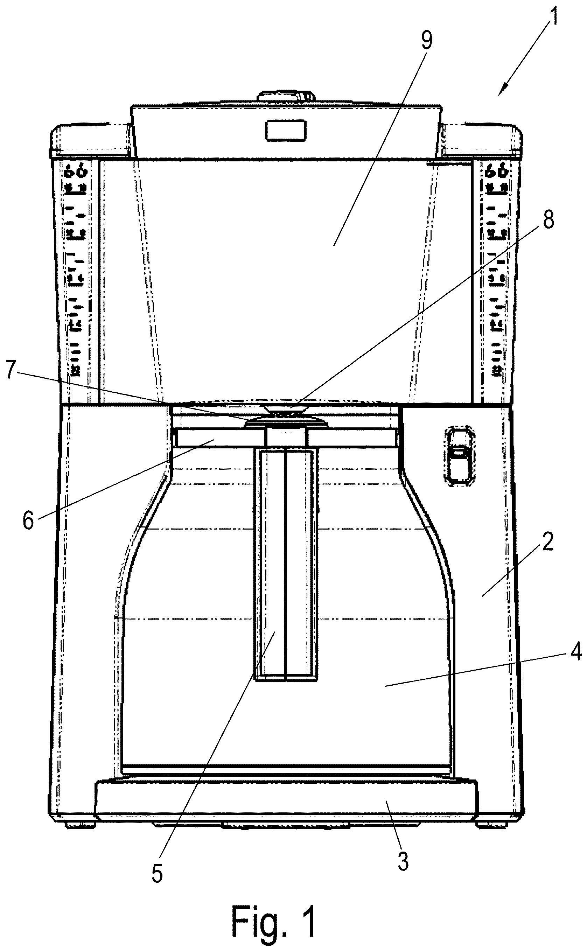

- Figur 1: eine Ansicht auf eine Kaffeemaschine mit einer erfindungsgemäßen Isolierkanne;
- Figur 2: eine perspektivische Ansicht der Isolierkanne mit abgenommenem Deckel;
- Figur 3: eine Schnittansicht durch die Isolierkanne mit geschlossenem Deckel;
- Figuren 4A und 4B: zwei Schnittansichten des Deckels der Isolierkanne in unterschiedlichen Positionen;
- Figur 5: eine Schnittansicht durch den Deckel der Isolierkanne im Bereich der Rastmittel;
- Figur 6: eine Schnittansicht durch den abgenommenen Deckel;
- Figur 7: eine Explosionsdarstellung des Deckels;
- Figur 8: eine perspektivische Explosionsdarstellung des Deckels von unten, und
- Figur 9: eine Schnittansicht durch das Oberteil des Deckels.

Eine Kaffeemaschine 1 umfasst ein Gehäuse 2, an dem eine Bodenplatte 3 vorgesehen ist, auf der eine Isolierkanne mit einem Behälter 4 und einem Deckel 6 abgestellt ist. An dem Behälter 4 ist ein hervorstehender Griff 5 vorgesehen, um die Isolierkanne aus der Kaffeemaschine 1 zu entfernen oder einzufügen. Oberhalb des Deckels 6 ist eine Aufnahme 9 für einen Filterpapiereinsatz mit Kaffeemehl vorgesehen, damit heißes Wasser von oben an einem Auslass 8 über ein Ventil 7 in den Behälter 4 einströmen kann.

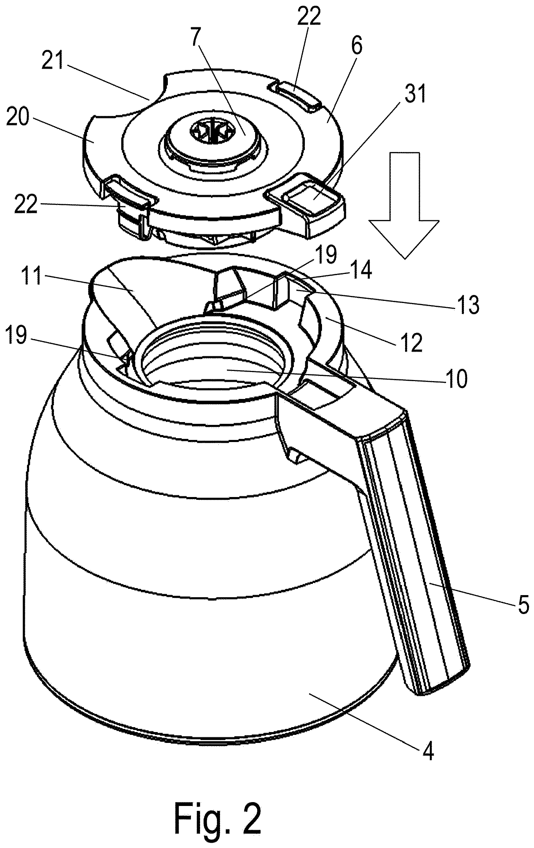

In Figur 2 ist die Isolierkanne mit abgenommenem Deckel 6 gezeigt. Der Behälter 4 umfasst am oberen Ende eine zylindrische Öffnung 10, die von einem ringförmigen Rand 12 umgeben ist. An dem Rand 12 ist eine hervorstehende Tülle 11 ausgebildet, die auf der zum Griff 5 gegenüberliegenden Seite angeordnet ist. An gegenüberliegenden Seiten des Randes 12 sind Aussparungen 13 ausgebildet, an denen im oberen Bereich ein nach innen hervorstehender Rastvorsprung 14 hervorsteht.

Der Deckel 6 weist ein Oberteil 20 auf, das an dem Behälter 4 verrastet werden kann. Hierfür sind an gegenüberliegenden Seiten Rastmittel in Form von Federstegen 22 vorgesehen, die beim Einstecken des Deckels 6 von oben in Eingriff mit den Rastvorsprüngen 14 gelangen, um das Oberteil 20 des Deckels 6 zu verriegeln. Ferner ist an dem Deckel 6 ein Betätigungselement 31 vorgesehen, mittels dem die Öffnung 10 zum Ausgießen von Flüssigkeit geöffnet werden kann. Auf der zu dem Betätigungselement 31 gegenüberliegenden Seite ist an dem in Draufsicht im Wesentlichen kreisförmigen Oberteil 20 eine Einbuchtung 21 vorgesehen, die im Bereich der Tülle 11 angeordnet ist.

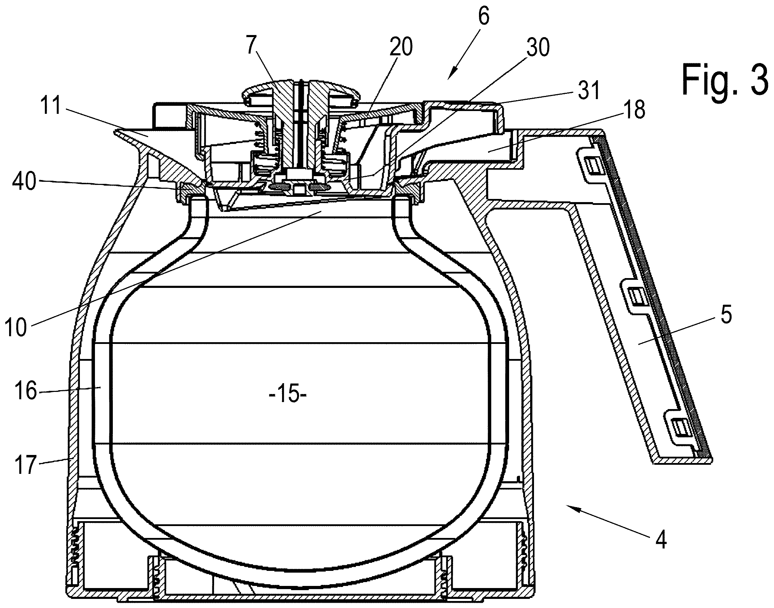

In Figur 3 ist der Behälter 4 im Schnitt dargestellt. Der Behälter 4 umfasst einen Isolierglaskörper 16, in dem ein Innenraum 15 zur Aufnahme von Flüssigkeit vorgesehen ist. Um den Isolierglaskörper 16 ist ein Kannengehäuse 17 angeordnet, wobei das Kannengehäuse 17 beabstandet von dem Isolierglaskörper 16 positioniert ist. Der Isolierglaskörper 16 weist die obere Öffnung 10 auf, wobei an dem Rand um die Öffnung 10 eine Dichtung 40 zwischen Isolierglaskörper 16 und Kannengehäuse 17 vorgesehen ist.

In Figur 3 ist ferner erkennbar, dass an dem Deckel 6 mittig ein höhenbewegliches Ventil 7 vorgesehen ist, das das Oberteil 20 durchgreift und an einem Unterteil 30 des Deckels 6 gehalten ist. Das Oberteil 20 weist dabei eine asymmetrische Öffnung für das Ventil 7 auf.

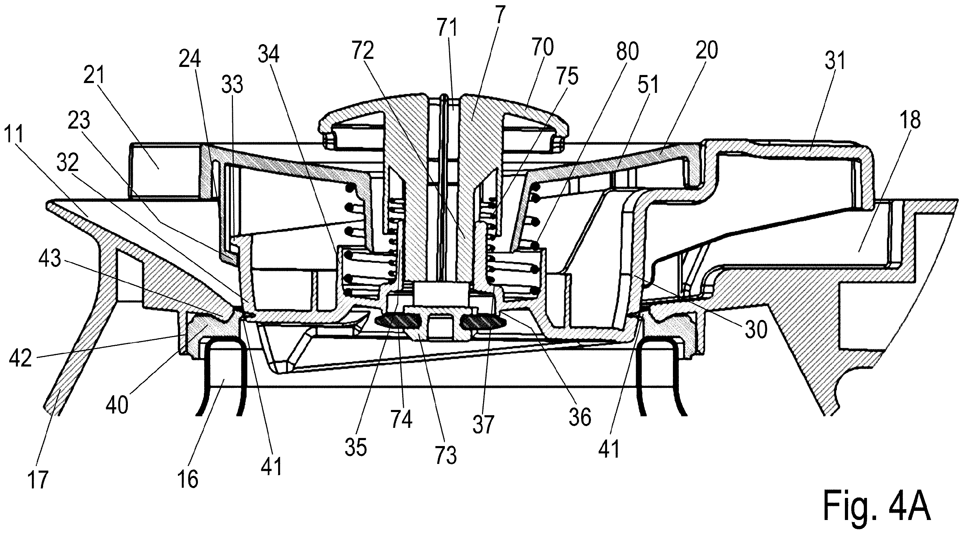

In Figur 4A ist der Deckel 6 im Detail in einer Verschlussposition gezeigt. Der Zwischenraum zwischen Isolierglaskörper 16 und Kannengehäuse 17 ist über die Dichtung 40 abgedichtet, die eine nach innen hervorstehende Dichtlippe 41 aufweist. Die Dichtung 40 liegt dabei auf einer oberen Kante des Isolierglaskörpers 16 auf und wird nach oben durch eine Wölbung 43 an dem Kannengehäuse 17 gegen den Rand des Isolierglaskörpers 16 gedrückt. Ferner wird die Dichtung 40 nach außen durch einen Steg 42 an dem Kannengehäuse 17 abgestützt.

Die Dichtung 40 dichtet allerdings nicht nur den Bereich zwischen Isolierglaskörper 16 und Kannengehäuse 17 ab, sondern über die Dichtlippe 41 zusätzlich auch gegenüber dem Deckel 6. Hierfür drückt die Dichtlippe 41 gegen eine Seitenwand 32 des Unterteils 30 des Deckels 6. Die Dichtlippe 41 ist in dieser Darstellung unverformt dargestellt. Tatsächlich liegt sie an der paraboloiden Fläche der Seitenwand 32 an. Die Seitenwand 32 ist dabei ringförmig ausgestaltet und kann nach unten kegelstumpfförmig oder parabelartig zulaufen. Das Unterteil 30 ist im Wesentlichen topfförmig ausgebildet und weist eine innere Öffnung auf, an der das Ventil 7 durchgeführt ist.

In der Verschlussposition kann der Behälter 4 über das Ventil 7 befüllt werden, wobei das Ventil 7 im Wesentlichen pilzkopfförmig ausgebildet und eine obere gewölbte Oberfläche 70 aufweist, von der Flüssigkeit ablaufen kann und auf eine nach innen und unten geneigte wannenförmige Aufnahme 51 des Oberteils 20 auftreffen kann. Wird die Isolierkanne in die Kaffeemaschine 1 eingesetzt, drückt ein Auslass 8 oder ein Vorsprung gegen das Ventil 7, um dieses geringfügig nach unten zu drücken. Dadurch wird das Ventil 7 geöffnet und ein innerer Kanal 71 in einem Ventilkörper 72 wird unterhalb des Auslasses 8 angeordnet, so dass gebrühter Kaffee durch den Kanal 71 nach unten strömen kann. Im unteren Bereich ist der Ventilkörper 72 mit einem Halter 73 ausgestattet, an dem eine ringförmige Dichtung 74 vorgesehen ist. Die Dichtung 74 liegt mit ihrer Oberseite an einer nach unten gerichteten Kante 36 des Unterteils 30 an. Befindet sich das Ventil 7 in der Verschlussposition, kann kein Kaffee in den Behälter 4 strömen oder über das Ventil 7 herausgelangen.

Der Ventilkörper 72 ist dabei in die geschlossene Position vorgespannt. Hierfür ist eine Feder 75 vorgesehen, die an einer Stufe 39 am Unterteil 30 einerseits und an einem Anschlag des Ventilkörpers 72 andererseits abgestützt ist. Dadurch wird die Dichtung 74 mittels der Feder 75 in die Verschlussposition gedrückt.

Ferner ist eine zweite Feder 80 vorgesehen, mittels der das Unterteil 30 weg von dem Oberteil 20 gedrückt wird. Beide Federn 75 und 80 sind als Schraubenfedern ausgebildet.

Das Unterteil 30 ist benachbart zu dem Betätigungselement 31 drehbar an dem Oberteil 20 gelagert. Das integral mit dem Unterteil 30 ausgebildete Betätigungselement 31 kann nach unten gedrückt werden, wobei hierfür an dem Griff 5 eine entsprechende Aufnahme 18 vorgesehen ist, die eine Bewegung des Betätigungselementes 31 nach unten zulässt.

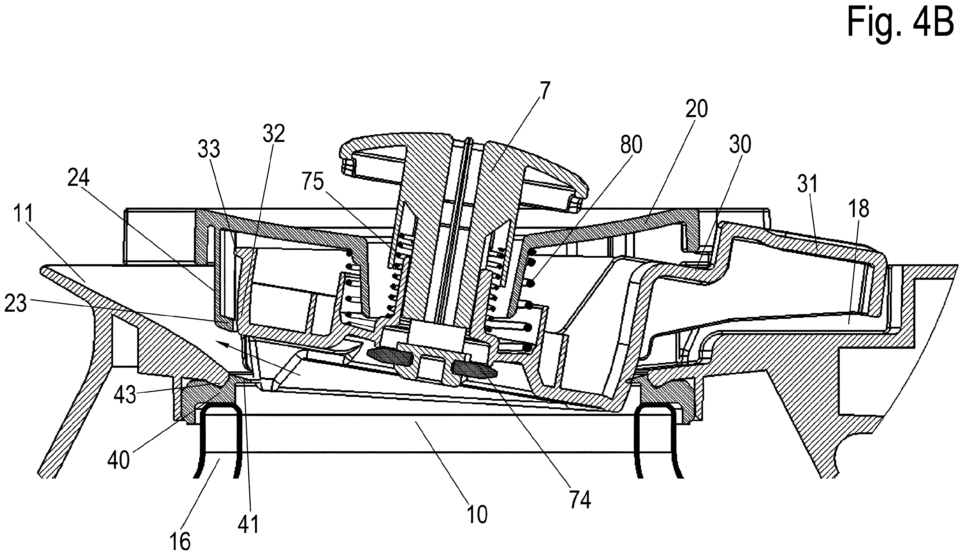

In Figur 4B ist das Unterteil 30 relativ zu dem Oberteil 20 verschwenkt worden, indem das Betätigungselement 31 nach unten gedrückt wurde. Dadurch wird auf der zu dem Griff 5 gegenüberliegenden Seite das Unterteil 30 nach oben verschwenkt, wodurch die Seitenwand 32 teilweise von der Dichtlippe 41 abhebt. Dies ermöglicht das Ausgießen einer Flüssigkeit über die Tülle 11, wie dies mit dem Pfeil dargestellt ist.

Wird das Betätigungselement 31 nun losgelassen, drückt die Feder 80 das Unterteil 30 wieder in die Verschlussposition, an der die Seitenwand 32 an der Dichtlippe 41 anliegt. Die Schwenkbewegung des Unterteils 30 wird dabei durch einen nach außen gerichteten hervorstehenden Anschlag 33 begrenzt, der an einem Halter 23 an einer Seitenwand 24 des Oberteils 20 zur Anlage kommt.

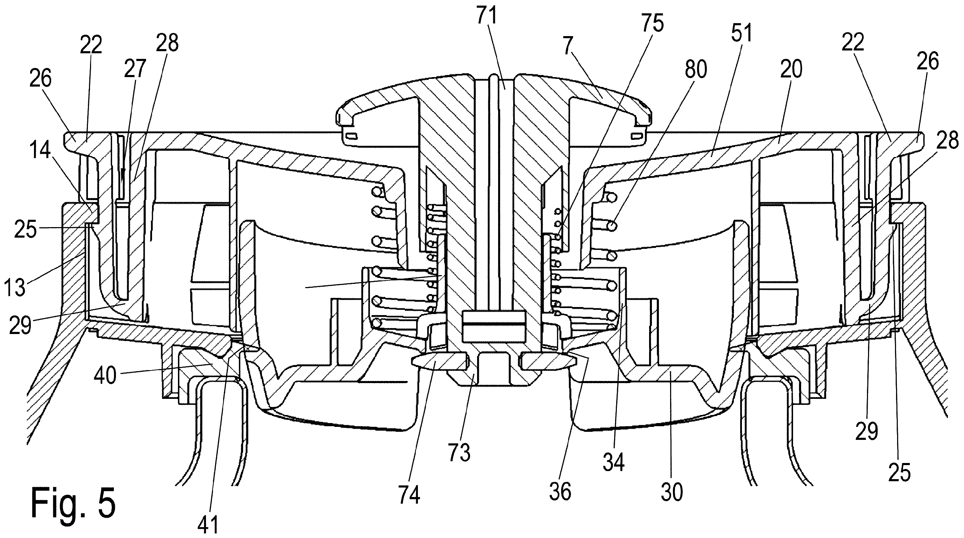

In Figur 5 ist der Deckel 6 in einem Schnitt durch die Rastmittel dargestellt. Die Rastmittel sind als biegbare Federstege 22 ausgebildet, wobei an gegenüberliegenden Seiten jeweils ein Federsteg 22 integral mit dem Oberteil 20 ausgebildet ist. Jeder Federsteg 22 weist einen nach außen gerichteten Rastvorsprung 25 auf, der den Rastvorsprung 14 an der Aussparung 13 des Kannengehäuses 17 hintergreift. Oberhalb des Rastvorsprunges 14 ist an dem Federsteg 22 ein Betätigungsabschnitt 26 ausgebildet, der nach außen hervorsteht und durch einen Benutzer leicht gegriffen werden kann, da der Betätigungsabschnitt 26 über einen Griffspalt beabstandet von dem Rastvorsprung 14 angeordnet ist. Der Benutzer kann dabei den Federsteg 22 leichtgängig nach innen drücken, da der Federsteg 22 mit einem Spalt 27 von einer Seitenwand 28 des Oberteils 20 angeordnet ist und die Seitenwand 28 über eine U-förmige Umlenkung 29 mit dem Federsteg 22 verbunden ist. Der Benutzer kann dadurch mit einer Hand die beiden Federstege 22 zusammendrücken und den Deckel 6 nach oben von dem Behälter 4 entfernen, was die Handhabung vereinfacht.

Um den Deckel 6 an dem Behälter 4 zu montieren, wird dieser von oben auf den Behälter 4 aufgesteckt, wobei an dem Rand 12 entsprechende Führungsmittel vorgesehen sind, um die Positionierung des Deckels 6 zu erleichtern. Wenn der Deckel 6 auf den Behälter 4 aufgesetzt wird, drücken Führungsmittel am Rand 12 den Deckel 6 nach vorn. Dabei werden Rippen 46 am Oberteil 20 unter korrespondierende Ausnehmungen 19 im Schüttrand (Fig. 2) geschoben. Die Rippen 46 liegen dann in der Ausnehmung 19 und unter einer Kante des Schüttrandes, so dass eine Bewegung des Oberteiles 20 nach oben verhindert wird. Da die Rippen 46 nur sehr kurz sind, behindern sie ein Abnehmen des Deckels 6 nach einem Entriegeln der Federstege 22 von dem Behälter 4 nicht. Statt zwei Rippen 46 kann auch nur eine Rippe 46 oder mehr als zwei Rippen vorgesehen sein.

Der Deckel 6 wird dann von oben auf die Öffnung 10 aufgesteckt, bis die Rastvorsprünge 25 an den Federstegen 22 hinter den Rastvorsprüngen 14 verrasten. In dieser Position liegen die Dichtlippen 41 der Dichtung 40 an den Seitenwänden 32 des Unterteils 30 an und stellen die erforderliche Abdichtung bereit.

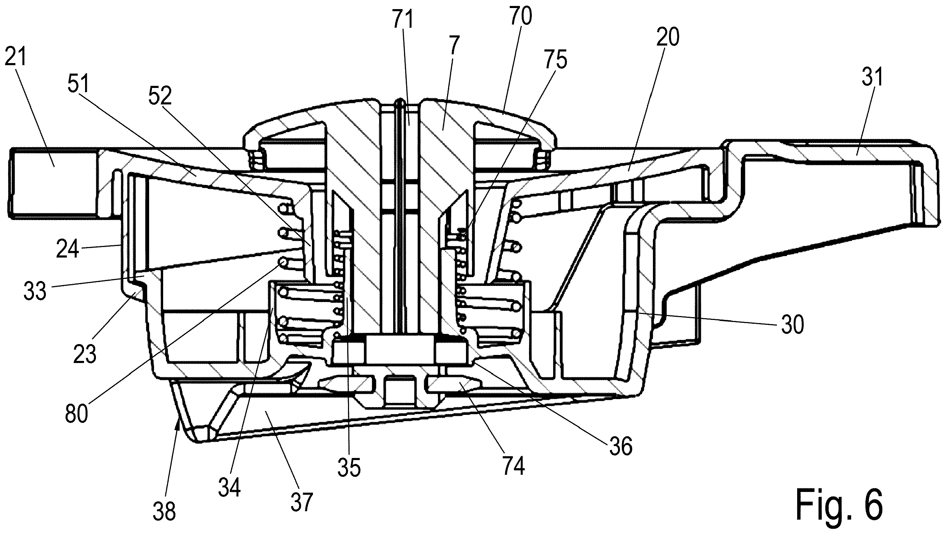

In Figur 6 ist der Deckel 6 mit dem Ventil 7 in der geöffneten Position gezeigt. Durch einen nicht dargestellten Vorsprung wird das Ventil 7 gegen die Kraft der Feder 75 leicht nach unten gedrückt, so dass das Ventil 7 sich nach unten von den Kanten 36 entfernt hat, so dass eine Flüssigkeit durch den Zwischenraum zwischen dem Ventil 7 und den Kanten 36 in den Behälter 4 einströmen kann. Sollte etwas Flüssigkeit von dem Ventil 7 an der gewölbten Oberfläche 70 auf die wannenförmige Aufnahme 51 des Oberteils 20 strömen, gelangt die Flüssigkeit über einen nach unten gerichteten Stutzen 52 an der wannenförmigen Aufnahme 51 in eine Aufnahme zwischen zwei nach oben hervorstehenden ringförmigen Wänden 34 und 35, an deren Bodenbereich innere Öffnungen vorgesehen sind, damit die Flüssigkeit nach innen innerhalb der Kante 36 einströmen kann. Die Öffnungen sind somit oberhalb der Dichtung 74 angeordnet, so dass die Flüssigkeit bei geöffnetem Ventil 7 nun in den Behälter 4 einströmen kann. Das Ventil 7 kann dann bei einer Entnahme der Isolierkanne aus der Kaffeemaschine 1 verschlossen werden, indem die Feder 75 den Ventilkörper 72 nach oben drückt, so dass die Dichtung 74 an der Kante 36 dichtend anliegt und den Bereich darüber damit verschließt.

Das Unterteil 30 ist im nach unten gerichteten Bereich nicht horizontal eben ausgebildet, sondern weist eine von der Seite des Betätigungselementes 31 zur Seite der Einbuchtung 21 schräg nach außen verlaufende Kante 37 auf. Die Kante 37 ist im Bereich der Tülle 11 mit einer Aussparung 38 versehen, so dass die Flüssigkeit beim Verschwenken des Unterteils 30 relativ zu dem Oberteil 20 gezielt durch die Aussparung 38 in die Tülle 11 ausströmt, während die Kante 37 an der Dichtlippe 41 anliegt und eine Dichtung in diesem Bereich vorhanden ist. Dadurch wird vermieden, dass Flüssigkeit seitlich an dem Deckel 6 ausströmen kann. Im unteren Bereich der Kante 37 ist ferner ein kleiner Ausschnitt 45 vorgesehen. Der kleine seitliche Ausschnitt 45 ermöglicht, dass beim Ausgießen bei austretender Flüssigkeit aus de Behälter 4 Luft wieder in den Behälter 4 hineinströmen kann. Der Ausschnitt 45 ist so angeordnet, dass er bei geschlossenem Deckel und dem Unterteil 30 in der Verschlussstellung unterhalb der Dichtlinie der Dichtung 40 liegt. In der Verschlussposition des Unterteils 30 liegt die Dichtung 40 an der Kante 37 an. Damit ist der Deckel 6 dicht abgeschlossen und ein Temperaturverlust wird vermieden. Wird das Unterteil 30 in eine Öffnungsposition verschwenkt, bewegt sich die Aussparung 38 und der Ausschnitt 45 über die Dichtlinie der Dichtung 40 hinaus und gibt den Weg zur Tülle 11 und den Ausschnitt 45 als Belüftungsöffnung frei. Es ist auch möglich, mehrere kleine Ausschnitte 45 für das Nachströmen von Luft bei Ausgießen an der Kante 37 vorzusehen.

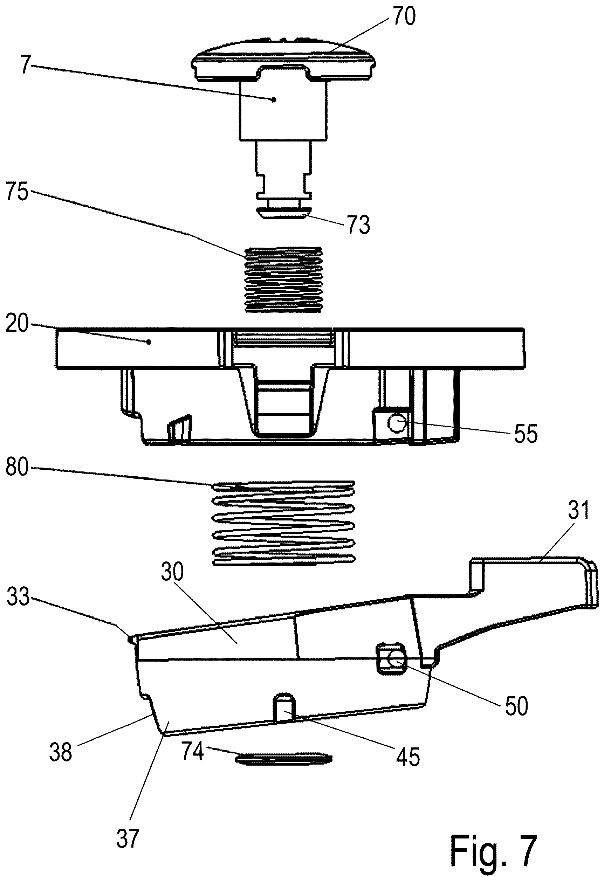

In Figur 7 ist der Deckel in einer Explosionsdarstellung gezeigt. Das Ventil 7 durchgreift das Oberteil 20 mit einem Teil des Ventilkörpers, wobei das Oberteil 20 lösbar an dem Behälter 4 verrastet werden kann. An dem Oberteil 20 ist an gegenüberliegenden Seiten eine Lageraufnahme 55 ausgebildet, in die ein Lagerzapfen 50 des Unterteils 30 eingreift. Der Lagerzapfen 50 ist dabei außermittig auf der Seite des Betätigungselementes 31 angeordnet und ermöglicht ein Verschwenken des Unterteils 30 um eine horizontale Achse relativ zu dem Oberteil 20. Um das Unterteil 30 in die Verschlussposition vorzuspannen, ist die Feder 80 vorgesehen. Ferner ist die Feder 75 an dem Unterteil 30 abgestützt, um das Ventil 7 ebenfalls in die Verschlussposition vorzuspannen.

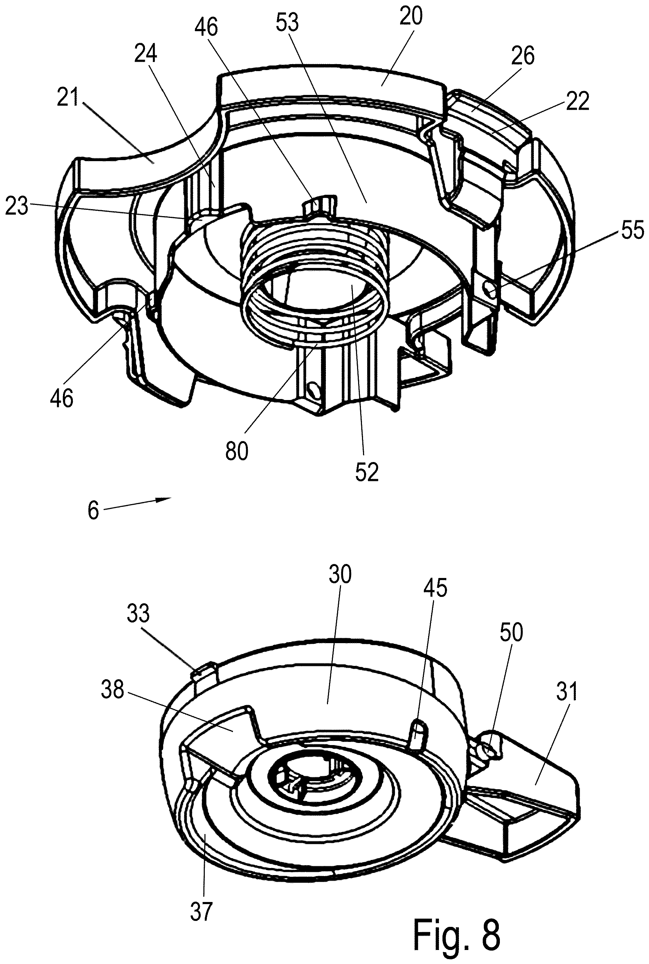

In Figur 8 ist der Deckel 6 in einer perspektivischen Explosionsdarstellung gezeigt, bei dem die Lageraufnahmen 55 an dem Oberteil 20 erkennbar sind. Ferner ist erkennbar, dass benachbart zu der Einbuchtung 21 die Seitenwand 24 an dem Oberteil 20 vorgesehen ist, an der ein nach innen hervorstehender Halter 23 angeordnet ist, der verhindert, dass das Unterteil 30 weiter nach unten verschwenkt werden kann. Hierfür ist an dem Unterteil 30 der Anschlag 33 vorgesehen. An dem Unterteil 30 ist ferner an der fast ringförmigen Kante 37 die Aussparung 38 vorgesehen, durch die die Flüssigkeit dann in die Tülle 11 gelangen kann. Der Deckel 6 besteht aus nur sechs Teilen und lässt sich daher besonders effektiv herstellen und montieren.

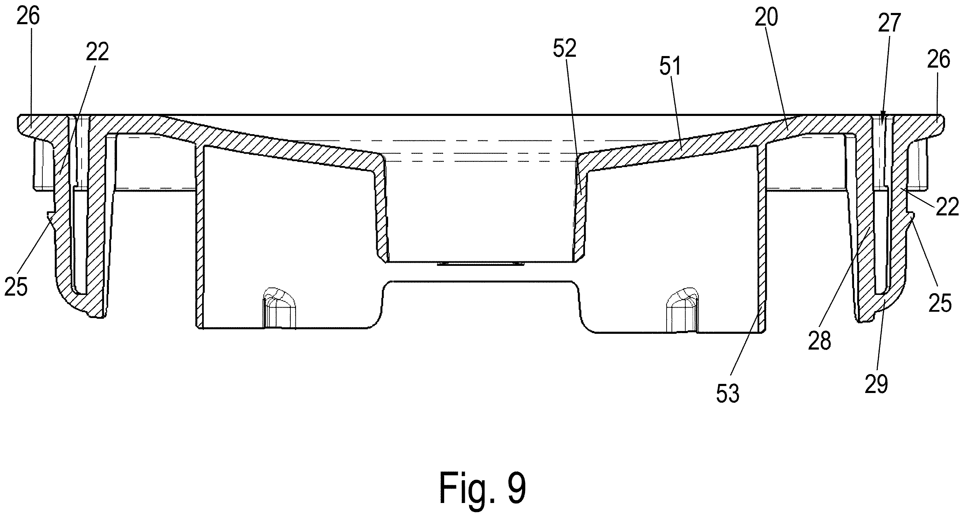

In Figur 9 ist ein Schnitt durch das Oberteil 20 des Deckels 6 gezeigt, bei dem die Federstege 22 gut zu sehen sind. Die Federstege 22 lassen sich an dem Betätigungsabschnitt 26 von einem Benutzer zusammendrücken, um die Verrastung an dem Behälter 4 zu lösen und den Deckel 6 nach oben abzunehmen. Dabei ist an dem Oberteil 20 das Unterteil 30 gehalten.

Das Oberteil 20 und das Unterteil 30 können einteilig aus Kunststoff hergestellt sein, auch das Ventil 7 kann aus Kunststoff hergestellt werden.

In dem dargestellten Ausführungsbeispiel sind zwei Rastmittel in Form von Federstegen 22 vorgesehen, die an gegenüberliegenden Seiten des Oberteils 20 integral ausgebildet sind. Es ist natürlich auch möglich, andere Rastmittel 22 vorzusehen oder nur ein Rastmittel oder mehr als zwei Rastmittel. Der Behälter 4 kann ein Kannengehäuse 17 aus Kunststoff oder Metall aufweisen, und der Behälter 4 kann statt einer doppelwandigen Ausbildung auch nur eine Wand aufweisen, die beispielsweise isoliert ist.

### Bezugszeichenliste

- 1: Kaffeemaschine
- 2: Gehäuse
- 3: Bodenplatte
- 4: Behälter
- 5: Griff
- 6: Deckel
- 7: Ventil
- 8: Auslass
- 9: Aufnahme
- 10: Öffnung
- 11: Tülle
- 12: Rand
- 13: Aussparung
- 14: Rastvorsprung
- 15: Innenraum
- 16: Isolierglaskörper
- 17: Kannengehäuse
- 18: Aufnahme
- 19: Ausnehmung
- 20: Oberteil
- 21: Einbuchtung
- 22: Federsteg
- 23: Halter
- 24: Seitenwand
- 25: Rastvorsprung
- 26: Betätigungsabschnitt
- 27: Spalt
- 28: Seitenwand
- 29: Umlenkung
- 30: Unterteil
- 31: Betätigungselement
- 32: Seitenwand
- 33: Anschlag
- 34: Wand
- 35: Wand
- 36: Kante
- 37: Kante
- 38: Aussparung
- 39: Stufe
- 40: Dichtung
- 41: Dichtlippe
- 42: Steg
- 43: Wölbung
- 45: Ausschnitt
- 46: Rippe
- 50: Lagerzapfen
- 51: Aufnahme
- 52: Stutzen
- 55: Lageraufnahme
- 70: Oberfläche
- 71: Kanal
- 72: Ventilkörper
- 73: Halter
- 74: Dichtung
- 75: Feder
- 80: Feder

## Patentansprüche

1. Isolierkanne, mit einem Behälter (4), der an der Oberseite eine Öffnung (10) aufweist, an der ein Deckel (6) gehalten ist, der die Öffnung (10) in einer Verschlussposition verschließt und über ein Betätigungselement (31) zumindest teilweise bewegbar ist, um die Öffnung (10) zum Ausgießen von Flüssigkeit teilweise freizugeben, wobei der Deckel (6) auf eine Aufnahme des Behälters (4) aufsteckbar und über Rastmittel (22) in der Verschlussposition gehalten ist, **dadurch gekennzeichnet, dass** der Deckel (6) ein an dem Behälter (4) fixiertes Oberteil (20) und ein verschwenkbar an dem Oberteil (20) gehaltenes Unterteil (30) aufweist.

2. Isolierkanne nach Anspruch 1, **dadurch gekennzeichnet, dass** mindestens ein biegbarer Federsteg als Rastmittel (22) vorgesehen ist.

3. Isolierkanne nach Anspruch 1 oder 2, **dadurch gekennzeichnet, dass** an gegenüberliegenden Seiten jeweils ein biegbarer Federsteg als Rastmittel (22) vorgesehen ist.

4. Isolierkanne nach einem der vorhergehenden Ansprüche, **dadurch gekennzeichnet, dass** jeder biegbare Federsteg einen nach außen gerichteten Rastvorsprung (25) aufweist, der in Eingriff mit einem Rastvorsprung (14) an dem Behälter (4) steht.

5. Isolierkanne nach einem der vorhergehenden Ansprüche, **dadurch gekennzeichnet, dass** an dem biegbaren Federsteg ein Betätigungsabschnitt (26) vorgesehen ist, mittels dem die Federstege zum Lösen der Rastverbindung nach innen gedrückt werden können.

6. Isolierkanne nach einem der vorhergehenden Ansprüche, **dadurch gekennzeichnet, dass** an dem Behälter (4) Führungsmittel vorgesehen sind, die den Deckel (6) beim Aufstecken seitlich verschieben, um mindestens eine Rippe (46) am Oberteil (20) in eine Ausnehmung (19) am Schüttrand des Behälters (4) einzufügen.

7. Isolierkanne nach einem der vorhergehenden Ansprüche, **dadurch gekennzeichnet, dass** um die Öffnung (10) des Behälters (4) eine ringförmige Dichtung (40) angeordnet ist, an der ein Unterteil (30) des Deckels (6) in einer Verschlussposition anliegt.

8. Isolierkanne nach einem der vorhergehenden Ansprüche, **dadurch gekennzeichnet, dass** an dem Unterteil (30) eine nach unten hervorstehende Kante (37) vorgesehen ist, an der zusätzlich zu einer Aussparung (38) für das Ausgießen mindestens ein Ausschnitt (45) als Belüftungsöffnung vorgesehen ist, wobei in der Verschlussposition des Unterteils (30) die Aussprung (38) und der mindestens eine Ausschnitt (45) zur Abdichtung des Behälters (4) unterhalb der Dichtung (40) angeordnet sind.

## Claims

1. Insulating flask, with a container (4) having at the upper side an opening (10) at which a lid (6) is retained, which in a closing position closes the opening (10) and is at least partly movable by way of an actuating element (31) in order to partly free the opening (10) for pouring out liquid, wherein the lid (6) can be plugged onto a receptacle of the container (4) and retained in the closing position by way of detent means (22), **characterised in that** the lid (6) has an upper part (20) fixed to the container (4) and a lower part (30) pivotably retained at the upper part (20).

2. Insulating flask according to claim 1, **characterised in that** at least one bendable spring web is provided as detent means (22).

3. Insulating flask according to claim 1 or 2, **characterised in that** a bendable spring web is provided as detent means (22) respectively at opposite sides.

4. Insulating flask according to any one of the preceding claims, **characterised in that** each bendable spring web has an outwardly directed detent projection (25) disposed in engagement with a detent projection (14) at the container (4).

5. Insulating flask according to any one of the preceding claims, **characterised in that** an actuating section (26), by means of which the spring webs can be pressed inwardly for releasing the detent connection, is provided at the bendable spring web.

6. Insulating flask according to any one of the preceding claims, **characterised in that** guide means are provided at the container (4) and laterally displace the lid (6), when plugged on, in order to insert at least one rib (46) at the upper part (20) into a recess (19) at the pouring edge of the container (4).

7. Insulating flask according to any one of the preceding claims, **characterised in that** an annular seal (40) at which a lower part (30) of the lid (6) bears in a closing position is arranged around the opening (10) of the container (4).

8. Insulating flask according to any one of the preceding claims, **characterised in that** provided at the lower part (30) is a downwardly protruding edge (37) at which, in addition to a recess (38) for pouring, at least one cut-out (45) is provided as a ventilating opening, wherein in the closing position of the lower part (30) the recess (38) and the at least one cut-out (45) are, for sealing of the container (4), arranged below the seal (40).

## Revendications

1. Pot verseur isotherme comprenant un réceptacle (4) qui comporte sur sa face supérieure une ouverture (10) sur laquelle est maintenu un couvercle (6) qui ferme l'ouverture (10) dans une position de fermeture et peut être déplacé au moins partiellement par l'intermédiaire d'un élément de manoeuvre (31) pour libérer partiellement l'ouverture (10) de façon à permettre le versement d'un liquide, le couvercle (6) pouvant être enfiché sur un logement de réception du réceptacle (4) et étant maintenu dans la position de fermeture par des moyens d'encliquetage (22),
**caractérisé en ce que**
le couvercle (6) comporte une partie supérieure (20) fixée sur le réceptacle (4) et une partie inférieure (30) maintenue mobile en pivotement sur la partie supérieure (20).

2. Pot verseur isotherme conforme à la revendication 1,
caractérisé(e) en ce qu'
il est prévu au moins une barrette élastique flexible en tant que moyens d'encliquetage (22).

3. Pot verseur isotherme conforme à la revendication 1 ou 2,
**caractérisé en ce qu'**
il est prévu respectivement sur des côtés opposés, une barrette élastique flexible en tant que moyens d'encliquetage (22).

4. Pot verseur isotherme conforme à l'une des revendications précédentes,
**caractérisé en ce que**
chaque barrette élastique flexible comporte un bec d'encliquetage (25) dirigé vers l'extérieur qui vient en prise avec un bec d'encliquetage (14) situé sur le réceptacle (4).

5. Pot verseur isotherme conforme à l'une des revendications précédentes,
**caractérisé en ce qu'**
il est prévu sur la barrette élastique flexible un segment de manoeuvre (26) au moyen duquel les barrettes élastiques peuvent être comprimées vers l'intérieur pour dégager la liaison par encliquetage.

6. Pot verseur isotherme conforme à l'une des revendications précédentes,
**caractérisé en ce qu'**
il est prévu sur le réceptacle (4) des moyens de guidage qui déplacent latéralement le couvercle (6) lors de l'enfichage pour insérer au moins une nervure (46) située sur la partie inférieure (20) dans un évidement (19) situé sur le bord de déversement du réceptacle (4).

7. Pot verseur isotherme conforme à l'une des revendications précédentes,
**caractérisé en ce qu'**
autour de l'ouverture (10) du réceptacle (4) est monté un joint d'étanchéité annulaire (40) sur lequel s'applique la partie inférieure (30) du couvercle (6) dans la position de fermeture.

8. Pot verseur isotherme conforme à l'une des revendications précédentes,
**caractérisé en ce qu'**
il est prévu sur la partie inférieure (30) une arête (37) faisant saillie vers le bas sur laquelle, outre un évidement (38) permettant le versement au moins une entaille (45) constituant une ouverture d'aération, dans la position de fermeture de la partie inférieure (30), l'évidement (38) et l'entaille (45) étant positionnés pour permettre d'assurer l'étanchéité du réceptacle (4) au-dessous du joint d'étanchéité (40).
